# EUROPEAN PATENT APPLICATION

(11) **EP 1 241 747 A1**
(43) Date of publication of application: **18.09.2002**
(21) Application number: 01440077.4
(22) Date of filing: 16.03.2001
(51) Int. Cl.: H01S 3/094, H01S 3/067

(54) **Pumping scheme for waveguide amplifier**

(71) Applicant: ALCATEL, 75008 Paris (FR)
(72) Inventor: Roy, Fabien, Residence Les Vignes de Bures Bât B2, 91940 Les Ulis (FR); Bayart, Dominique, 92140 Clamart (FR)
(74) Representative: Rausch, Gabriele, Dr.

(57) **Abstract**

The invention is related to a waveguide amplifier with an input for optical signals and an output for optical signals with at least one piece of amplifying waveguide with at least one mean for coupling pump laser modules to the amplifying waveguide which contains Tm ions. The invention is also related to a pumping scheme for waveguide amplifier feeding two different wavelengths in to the waveguide.

## Description

### Prior Art

The invention is related to a waveguide amplifier with an input for optical signals and an output for optical signals with at least one piece of amplifying waveguide with at least one mean (4) for coupling pump laser modules to the amplifying waveguide which contains Tm ions. The invention is also related to a pumping scheme for waveguide amplifier feeding two different wavelengths in to the waveguide .

A number of waveguide amplifiers especially fiber amplifiers for amplifying signals in an optical transmission network are well established or under investigation. There is a category using the principle of doping glass fibers with rare earth ions such as praseodymium (PR³⁺), neodymium (Nd³⁺), erbium (ER³⁺) thulium (Tm³⁺), ytterbium (Yb³⁺)
In this rare earth doped fiber amplifiers the glass is a passive host and the medium polarization responsible for the field interaction is generated by the doping ions. As the rare earth concentration can be made large, up to 10 weight % the fiber lengths can be relatively short. Signal amplification is due to stimulated emission accompanied by relaxation of the excited ion. In this type of amplifiers the pump and the signals bands are fixed by the rare earth atomic resonances. In the rare earth doped amplifiers the gain spectrum can be modified by the co dopants in the matrix. The glass host also affects the Stark level positions, transition homogeneous and inhomogeneous line widths and the non-radiative decay characteristics.

For example, US 5,973,824 is known, which describes the production and use of an amplifying fiber composed of a glass composition of germanium, arsenic, selenium and sulfur. It is also known to use other non-oxidic types of glass as material for amplifying fibers. In particular, the use of materials consisting of halides and sulfides doped with rare earths, as amplifying fibers seems promising. Compared to silica glass, halide- and in particular fluoride glass it has transparent properties, which extend spectrally substantially further into the long-wave range. This is due to the spectral shift of the multi-phonon absorption edge as a result of the incorporation of substantially heavier ions. The mechanical behavior and the reaction to humidity are different compared to silica glass. The advantage of the material is the low photon energy that reduces the non radiative decay of the exited states.. Recently it has been possible to produce fiber amplifiers operating with fibers composed of ZBLAN (Zr-Ba-La-Al-Na) fluoride glass. Due to its relatively high refractive index and the flexibility of its composition, sulfide glass can be considered as a promising candidate for use as amplifying material. Therefore great efforts are being undertaken worldwide to produce many different types of halide glass with low phonon energies. Hey give the possibility to exploit other than the well known radiative energy levels for dopants than the silica materials.

Especially thulium-doped fibers are under investigation for extending the usable bandwidth of optical communications. The intention is to create a broadband amplifier and to open the transmission window around 1480 nm, in the S-band, for data transfer.

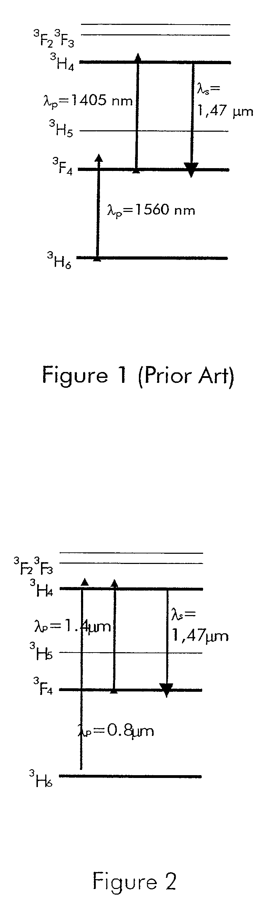

Recent publications are dealing with another kind of thulium doped fiber. The document "thulium doped silicate fiber amplifier." Samson et al. Tech. Dig. Optical Amplifier and their Application, OAA, Paper PD1, 2000 describes a fiber amplifier doped with thulium in a silicate matrix. The use of silicate glass instead of ZBLAN avoids some problems of the ZBLAN material. The thulium ion is pumped in a scheme shown in Fig. 1. From the ground state ₃H⁶ the first excited level ₃F⁴ is pumped. This pumping needs a 1560 pump source (ground state absorption GSA). Than the excited level ₃F⁴ is pumped with around 1410 nm pump to the level ₃H⁴ state in a process called excited state absorption ESA.

Another publication, T. Kasamatsu, Y. Yano and T. Ono, _Laser-diode pumping (1.4 and 1.56µm) of gain-shifted thulium-doped fiber amplifier,_ IEE Electronics Letters 36, 1607-1608 (2000) describes the amplification scheme in case of a fluoride-based amplifier.
The problem with the pumping scheme in prior art is the efficiency of the GSA related to the absorption cross section of the excited level. Another problem occurs with the pumping wavelength of 1560 nm, which is in the range of the C-band signals. Therefore filtering problems for pump light occurs.

The invention proposes a waveguide amplifier with a hybrid pumping scheme for thulium-doped ions and a use of a more effective and better-adapted wavelengths.

In detail the invention allows the to build a Tm waveguide for example a fiber amplifier with two pump sources of 800 nm and 1410 nm.

### Description of the invention

The invention is shown in the figures and described in the following description:
- Figure 1:: Prior art pumping scheme
- Figure 2:: Pumping scheme of the invention
- Figure 3:: examples for a Tm fiber amplifier

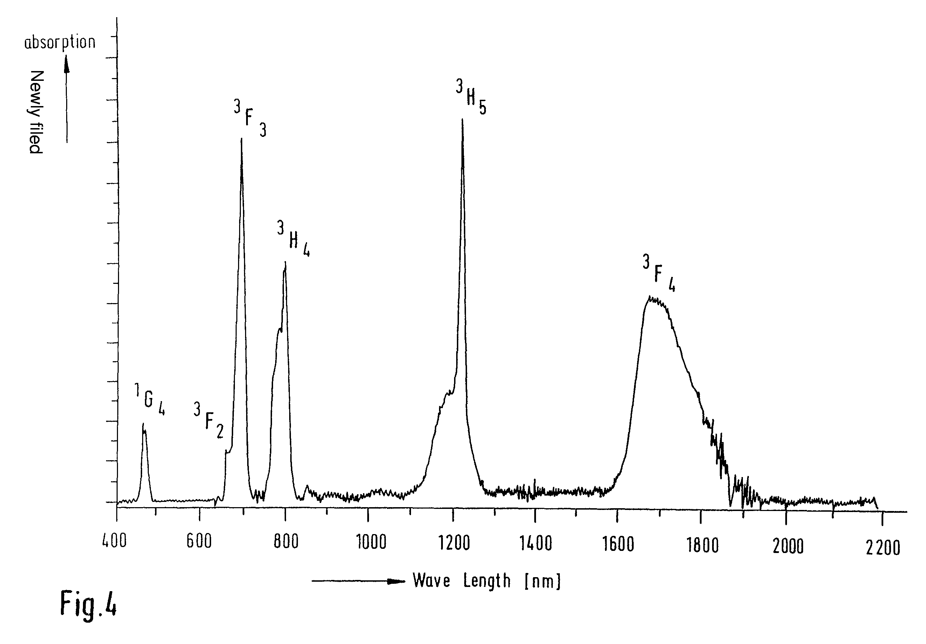

- Figure 4:: absorption spectrum of Tm in ZBLAN matrix

Figure 5 shows an absorption spectrum for Tm ions in a ZBLAN matrix. One can see strong absorption peaks for the transfer to ³F₄ which is the ground state absorption. This absorption peak is broad and can be easily pumped by a semiconductor amplifier. The peak with the next higher energy level is related to the ³H₄ level. This absorption peak has a little smaller absorption cross section and a smaller absorption line. Using a laser pump with 800 nm can very effectively pumping this level of the Tm³⁺ ion. The second pump laser excites thulium ions that are in the 3F4 level into ions in the 3H4 level. For the best performance the ratio of the pump powers is important. Good result can be obtained with a ratio between the 0.8-µm pump power and the 1.4-µm pump power between 10 to 30%. Preferable the pumping ratios for pump sources of a power of 800 mW are a value of 20 % for the 800 nm pump and 80% for the 1410 nm pump. The pump wavelengths should not be too sharp. For the glass host influences the energy levels of the dope ions , the absorption depends on the glass environment and the magnetic and electrical field that can be seen by the dope ion. Therefore a bandwidth for the 800 nm pump of +/- 20 nm and for the 1410 nm pump of +/-30 nm is a reasonable value.
With this pumping scheme an effective blocking of the ground state is possible . The inversion population of the ³F₄ is very high. The power conversion for a amplifier with a pumping scheme of 800 and 1410 nm strongly increases. Therefore the fiber length of the Tm doped fiber piece decrease. This reduces the total background losses of the amplifier.

An important characteristics is the lifetimes of the energy levels. The first excited state level (3F4) has a lifetime of nearly 9 ms. The higher excited state energy level has a lifetime of 1 ms. Therefore, 800-nm pumping alone gives rise to a bottleneck because all ions remains in the lower energy level 3F4 after signal amplification has desexcited the 3H4 level. Then, a 1410-nm pump enables to reach again the 3H4 level. Therefore, most of the ions will be kept either in the 3F4 level, or in the 3H4 level. This will therefore require mainly 1410-nm pump and a much lower additional 800-nm light, which interacts only with the ground state level.

The advantage of 800-nm pumping is that the adjustements of the two pump powers are easy because the 800-nm light does not directly modify the population of the 3F4 level , making also a better noise performance of the 800+1400 pumping scheme.

The inventional pumping scheme and amplifier can use every kind of host matrix for the Tm ion . The invention is not restricted to a ZBLAN or a silica glass. Also every other glass or crystal matrix can be used. Even the use of polymer host molecules is possible.

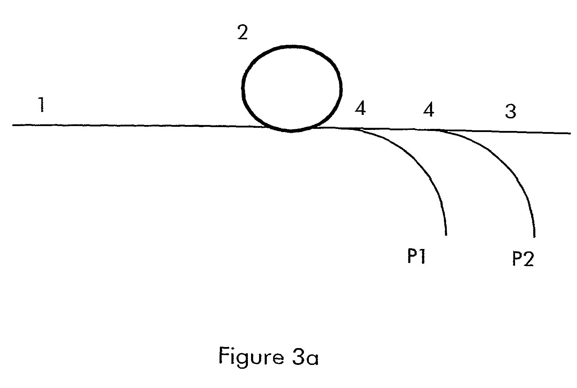

Figure 3a shows an amplifier using the new pumping scheme:
The optical input signal 1 is feed to a piece of amplifying fiber 2. The amplifying fiber is coupled versus a coupling mean with laser pump modules P1 and P2. The amplified optical signal 3 leaves the amplifier. This is an example of counter propagating pumping with both necessary wavelengths. For pumping semiconductor laser modules or Raman lasers are used. For instance both 0.8µm and 1,4µm pumps can be provided by semiconductor lasers or by Raman laser pumping by an Yb fiber laser or a Nd crystal laser.

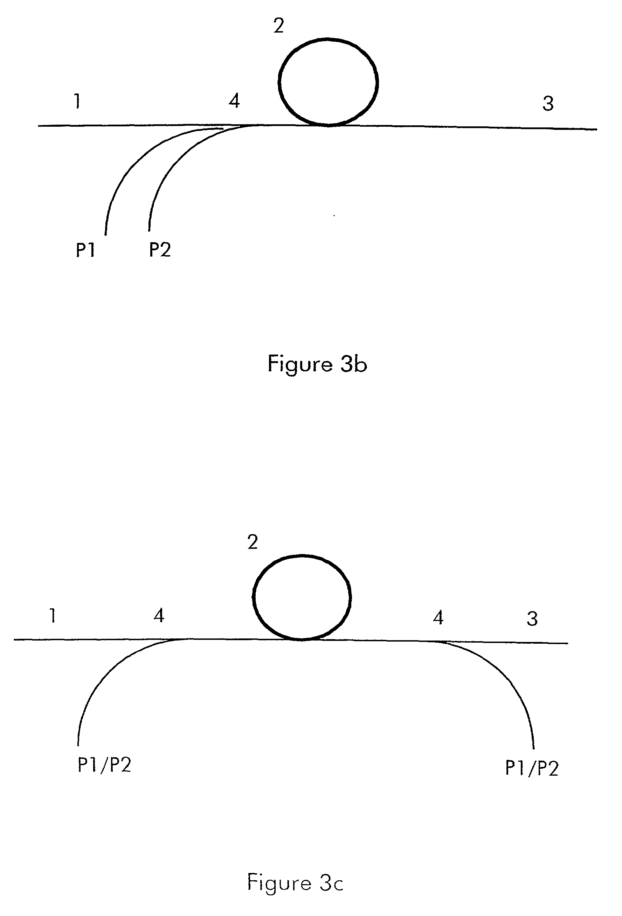

Fig. 3b shows the co propagating pumping scheme with a pumping in direction of the incoming optical signal. The coupling means 4 can be on e single coupler with a path to both lasers pump modules. Another solution uses two couplers for feeding the two necessary wavelengths to the amplifying fiber. The amplifying fiber exists in one preferred embodiment of a silicate fiber doped with at least Tm. Another preferred embodiment uses ZBLAN glass fiber with Tm dopes.

Fig. 3c shows a co/counter propagating pumping scheme where either the 800 nm or the 1410 nm pump module is connected before or after the amplifying fiber.

The fiber amplifiers as described in the figures and the description are an example for the realization of a waveguide amplifier doped with Tm. The waveguide structure can also be realized in a planar structure.

The pumping wavelengths are not restricted to a special wavelength with a special bandwidth but to the fact that the energy levels of the Tm ion must absorb the pump light in whatever environment the Tm ion is.
The glass host is not important for our invention. It influences the energy levels the total optical behavior of the amplifier, but not the principle of the pumping scheme.

## Claims

1. A waveguide amplifier with an input (1) for optical signals and an output (3) for optical signals with at least one piece of amplifying fiber (2) with at least one mean (4) for coupling pump laser modules (P1, P2) to the amplifying waveguide **characterized in that** the amplifying waveguide (2) consists of a material doped with Tm ions and the pump laser modules (P1, P2) emit a first wavelength of about 800 nm (³H₆ - ³F₄)and a second wavelength of about 1410 nm (³H₄ - ³F₄₎).

2. Waveguide amplifier (1) according to claim 1 **characterized in that** one pump module (P1, P2) is connected to the amplifying waveguide before the amplifying fiber and one pump module (P1, P2) after the amplifying waveguide .

3. Waveguide amplifier (1) according to claim 1 **characterized in that** both pump module (P1, P2) are connected to the amplifying waveguide before the amplifying waveguide for co propagating pumping.

4. Waveguide amplifier (1) according to claim 1 **characterized in that** both pump module (P1, P2) are connected to the amplifying waveguide after the amplifying waveguide for counter propagating pumping.

5. Waveguide amplifier (1) according to claim 1 with pumping scheme for pumping Tm ions in a waveguide by feeding two pump wavelengths of about 800 nm and 1410 nm simultaneously in the waveguide .

6. Telecom systems with at least a waveguide amplifier according to claim 1.
